# EUROPEAN PATENT SPECIFICATION

(11) **EP 2 108 569 B1**
(45) Date of publication and mention of the grant of the patent: **12.01.2011**
(21) Application number: 08738580.3
(22) Date of filing: 14.04.2008
(51) Int. Cl.: B60Q 1/26, B62D 25/08

(54) **REAR PANEL ARRANGEMENT FOR A MOTOR VEHICLE**
HECKPLATTENANORDNUNG FÜR EIN KRAFTFAHRZEUG
AGENCEMENT DE PANNEAU ARRIERE POUR UN VEHICULE MOTORISE

(30) Priority: 15.06.2007 JP 2007158366
(43) Date of publication of application: 14.10.2009
(73) Proprietor: Honda Motor Co., Ltd., Minato-ku Tokyo 107-8556 (JP)
(72) Inventor: HORIGUCHI, Jun, Wako-shi, Saitama, 351-0193 (JP)
(74) Representative: Trossin, Hans-Jürgen
(86) International application number: PCT/JP2008/000974
(87) International publication number: WO 2008/152763

(56) References cited:
- JP-A- 10 226 360
- JP-A- 10 226 360
- JP-A- 59 106 375
- JP-A- 2000 190 775
- JP-U- 1 167 970
- JP-U- 02 072 144
- JP-U- 06 032 141
- JP-U- 56 154 274

## Description

### TECHNICAL FIELD

The present invention relates to a rear panel arrangement for a motor vehicle, and in particular to a rear panel arrangement that includes an improved tail light mount.

### BACKGROUND OF THE INVENTION

According to a known tail light mount (or a rear combination lamp mount), an opening is stamp formed in a rear panel outer or a rear fender panel in such dimensions and a configuration as to conform to the lens of the tail light, and the tail lamp lens is closely fitted into the opening so as to define a smooth outer profile of the rear part of the vehicle body in cooperation with the surrounding part of the panel member (of the rear panel outer or rear fender panel). See Japanese patent laid open publication No. 11-105739, for instance.

In such a tail light mount arrangement, the positioning of the lens of the tail light is accomplished by passing mounting reference holes through a flange that extends from the panel member into the opening, and fitting corresponding positioning projections formed in the lens into the mounting reference holes. By thus properly positioning the lens in relation with the surrounding panel member, the surface of the lens is allowed to be smoothly continuous with the contour of the rear part of the vehicle body.

However, as the flanges through which the mounting reference holes are passed consist of cantilever pieces, and are therefore provided with a limited rigidity, they can readily deform during the stamp forming process and welding process. Therefore, some precaution is required to ensure the positional precision of the mounting reference holes, and this presents a challenge in ensuring the positional precision of the tail light lens at a high level.

When the opening is formed on each side part of the vehicle body in the shape of a V-shaped notch cut into the side panel member from a rear edge thereof, the flange typically extends from each of the upper side and lower side of the notch-shaped opening. However, during the stamping process and welding process for the panel member, the angle formed between the two sides of the notch tends to be narrowed or widened, and this causes the positions of the mounting references holes for a tail light to be pushed outward or inward, as the case may be, from the intended positions.

When the lens of a tail light is mounted by using the mounting reference holes for the positioning of the lens under such a condition, the lens becomes raised above or recessed below the outer surface of the surrounding panel member, and this prevents the surface of the lens to be a part of the smooth outer contour of the rear part of the vehicle body.

In other words, owing to the lack of rigidity of the flange provided with the mounting reference holes, the tail light is prevented from being mounted in the proper position.

In JP 2000 190775 A, on which the preamble of the claim is based, Fig. 5 shows a star-shaped connecting piece 19. According to Fig. 6, the connecting piece 19 is formed integrally with the panel outer 1.

In JP 59 106375 A, Fig. 4, the connection piece 64 is flat.

In JP 11 105739 A, the tail light housing has a substantially closed structure, and no profiled "connecting piece" is shown with any positioning hole where the above problem might occur.

JP 01 167970 U, Fig. 4, shows a connecting piece (no reference number) with a hole for mounting a set screw 18, but without any profiled cross-section.

In JP 56 154274 U, no comparable connecting piece is shown.

### BRIEF SUMMARY OF THE INVENTION

### TASK TO BE ACCOMPLISHED BY THE PRESENT INVENTION

In view of such problems of the prior art, a primary object of the present invention is to provide a rear panel arrangement for a motor vehicle that can prevent misalignment of a tail light caused by a deformation of a flange piece formed with a mounting reference hole owing to a lack of rigidity.

A second object of the present invention is to provide a rear panel arrangement for a motor vehicle that ensures the surface of the lens of the tail light to be highly continuous with the contour of the rear part of the vehicle body.

A third object of the present invention is to provide a rear panel arrangement for a motor vehicle that allows a high level of freedom in the design of the tail light.

### MEANS TO ACCOMPLISH THE TASK

According to the present invention, such objects of the present invention can be accomplished by providing a rear panel arrangement for a motor vehicle, comprising: a rear panel outer having a tail light mount opening formed therein; and a connecting piece extending across the tail light mount opening, the connecting piece being provided with a tail light mount reference hole for positioning a tail light, in accordance with claim 1.

Because the connecting piece connects the upper and lower ends of the tail light mount opening, the opening is made resistant to deformation, and this ensures the positional precision of the tail light mount reference hole. In particular, if the connecting piece is provided with a shaped cross section such as a L-shaped cross section, the rigidity of the connecting piece is improved, and the positional precision is further enhanced. Preferably, the connecting piece is integrally stamp formed with the rear panel outer.

Typically, the connecting piece is provided with a surface which is recessed with respect to a surrounding surface of the rear panel outer so that the tail light assembly may be mounted over the entire area of the tail light mount opening without unduly protruding from the surrounding contour of the rear side panel or rear panel outer.

According to a preferred embodiment of the present invention, the tail light mount opening is provided with a V-shaped notch including an open rear side, and an upper side and lower side that merge at a forward end of the tail light mount opening, the connecting piece extending substantially vertically between the upper and lower sides thereof. In this case, the connecting piece can effectively prevent the angle formed between the upper and lower sides of the tail light mount opening from changing during the handling of the rear panel outer.

The rear panel arrangement may further comprise a triangular panel inner which is attached to an inner side of the rear panel outer so as to at least partly close a triangular opening defined by a forward edge of the connecting piece and the upper and lower sides of the tail light mount opening, the triangular panel inner being welded to the connecting piece and parts of the rear panel outer adjoining the upper and lower sides of the triangular opening. Thereby, a triangular panel inner that defines a recess for receiving a tail light assembly can be formed as a separate component part so that the rear panel outer is not required to be formed with a recess as a drawing process at the time of stamping the rear panel outer, and this simplifies the stamping process of the rear panel outer. This triangular inner panel may be formed with an additional tail light mount reference hole so that the positional precision of the tail light may be improved even further.

If at least one tab piece extends from the rear panel outer into the triangular opening, the triangular panel inner can be conveniently welded to the tab piece.

### BRIEF DESCRIPTION OF THE DRAWINGS

Now the present invention is described in the following with reference to the appended drawings, in which:
Figure 1 is an overall perspective view of a motor vehicle to which the rear panel arrangement of the present invention is applied;
Figure 2 is a fragmentary enlarged perspective view of the rear panel inner of the rear panel arrangement embodying the present invention;
Figure 3 is an enlarged perspective view showing how the rear panel inner, rear pillar gutter and triangular panel inner are joined to one another; and
Figure 4 is a sectional view taken along line IV-IV of Figure 3.

### DETAILED DESCRIPTION OF THE PREFERRED EMBODIMENTS

An embodiment of the rear panel arrangement of the present invention is described in the following with reference to the appended drawings.

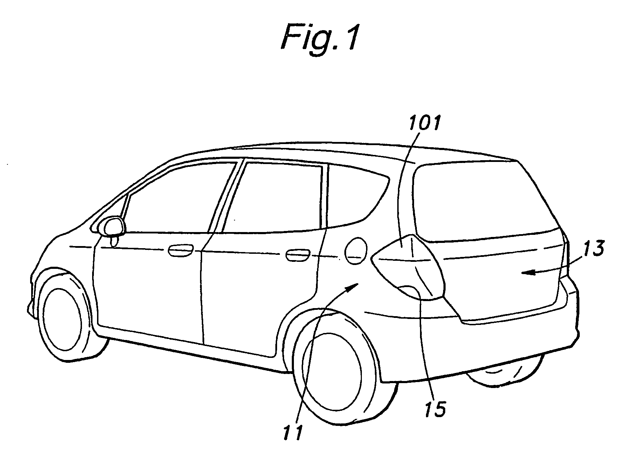

Figure 1 generally illustrates a motor vehicle to which the rear panel arrangement of the present invention is applied. In Figure 1, numeral 11 denotes a rear panel outer in a rear end of a side part of the vehicle body, and numeral 13 denotes a tailgate on the rear end of the vehicle body. The rear panel outer 11 is provided with a tail light mount opening 15 into which a lens 101 of a tail light is closely fitted. As a feature of the vehicle body design, the surface of the lens 101 smoothly connects to that of the rear end portion of the vehicle body.

The outer profile of the tail light defined by the lens 101 thereof has the shape of a V-shaped notch having a pointed end thereof facing forwardly of the vehicle body as seen from the side. In conformity with the outer profile of the lens 101, the tail light mount opening 15 has the shape of a V-shaped notch having a pointed end thereof facing forwardly of the vehicle body as seen from the side. In other words, the tail light mount opening 15 includes an open rear side, and an upper side and lower side that merge at a forward end of the tail light mount opening 15.

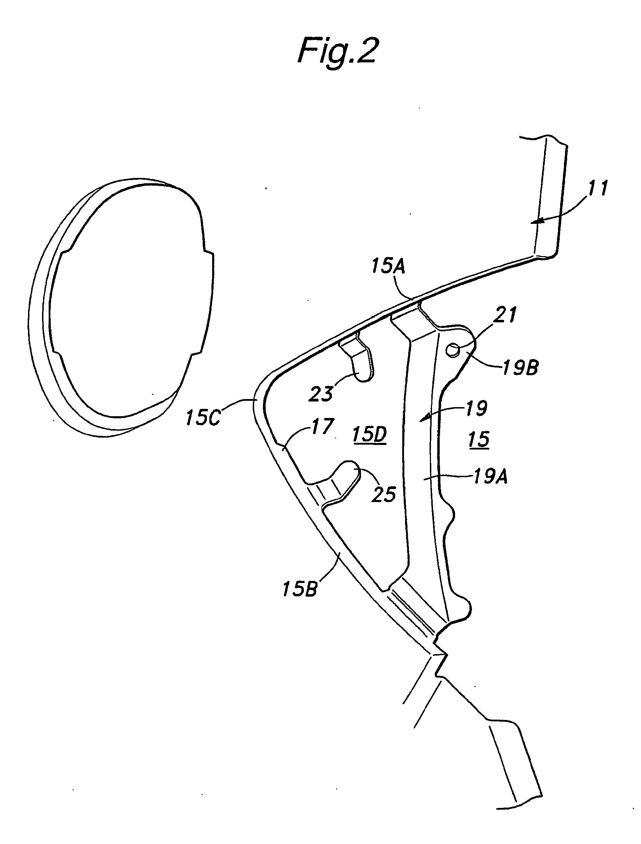

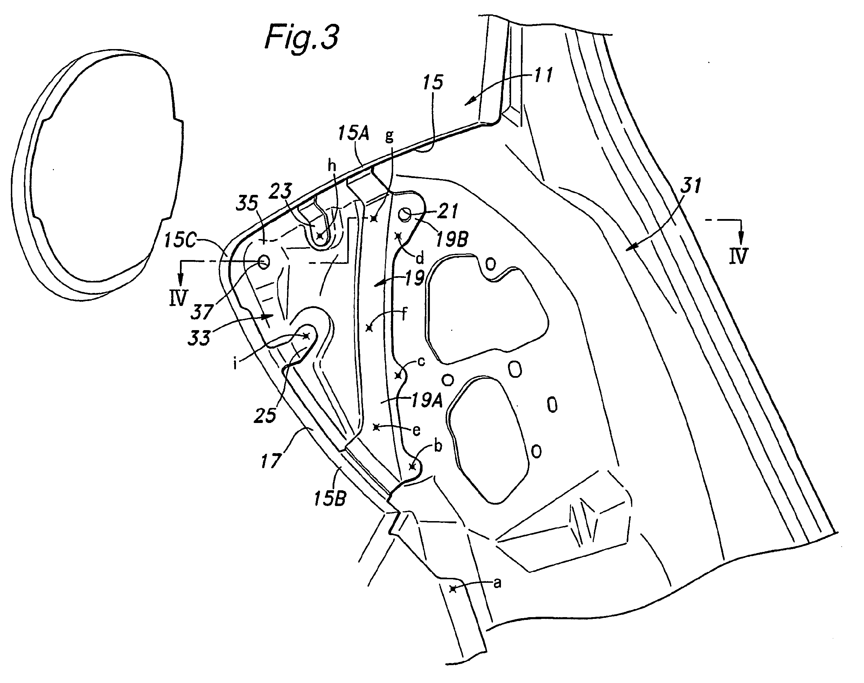

As best shown in Figures 2 and 3, the rear panel outer 11 is provided with a bent piece or flange 17 extending substantially in an inboard direction and along each of the upper side and lower side of the tail light mount opening 15. The rear panel outer 11 is integrally provided with a connecting piece 19 that joins the upper side 15A and lower side 15B of the tail light mount opening 15 as an extension of the flanges 17. In the illustrated embodiment, the connecting piece 19 extends substantially vertically between the upper and lower sides thereof. The connecting piece 19 includes a main part 19A as a continuous extension of the rear panel outer 11 and actually joins the upper and lower sides 15A and 15B. The outer surface of the main part 19A extends substantially in parallel with the surface of the surrounding part of the rear panel outer 11 but is recessed by a certain distance therefrom. The connecting piece 19 also includes a bent piece 19B that is bent in an inboard direction from the rear edge of the main body 19A in a perpendicular direction. Therefore, the connecting piece 19 is provided with an L-shaped cross section. The bent piece 19B is absent in each end portion of the connecting piece 19. If desired, the outer surface of the main part 19A may be flush with the surface of the surrounding part of the rear panel outer 11. Also, the connecting piece 19 may be provided with a shaped cross section other than the L-shapcd cross section. For instance, the main body 19A of the connecting piece 19 may have a pair of bent pieces both bent inboard on either side of the connecting piece 19.

A tail light mount reference hole 21 is passed through the bent piece 19B of the connecting piece 19 by a stamp forming process. As this hole 21 is formed in the bent piece 19B extending in the lateral direction of the vehicle body, the hole 21 is passed in the fore-and-aft direction of the vehicle body.

The connecting piece 19 is provided centrally with respect to the fore-and-aft direction of the opening 15 so that the opening 15 includes not only the open-ended part that is behind the rear edge of the connecting piece 19 but also a closed triangular opening 15D that extends from the front edge (left edge as seen in Figure 3) of the connecting piece 19 to the pointed (forward) end of the notch-shaped portion of the opening 15.

This eliminates the need for drawing this part of the rear panel inner 11 at the time of stamp forming the rear panel inner 11, and increases the freedom in the shape of the opening 15 or the outer profile of the lens of the tail light. Also, this simplifies the stamp forming process.

From the upper and lower sides 15A and 15B of the triangular opening 15D in the opening 15 extend bonding tab pieces 23 and 25 for spot welding, respectively, as extensions of the corresponding flanges 17.

To the inner side of the rear panel outer 11 is attached a rear pillar gutter 31 forming a rear panel inner by spot welding at points a to g. The rear pillar gutter 31 is placed so as to avoid the triangular opening 15D. The triangular opening 15D is closed from an inner side of the rear panel outer 11 by a triangular panel inner 33 which is formed as a member separate from the rear pillar gutter 31 and welded to points e, f and g of the connecting piece 19 and points I and h of the bonding tab pieces 23 and 25 by spot welding.

The triangular panel inner 33 is a relatively small draw worked piece, and is provided with a flat surface 35 which is recessed and extends in parallel with the bent piece 19B of the connecting piece 19. Another tail light reference mount hole 37 is passed through the flat surface 35 by stamp forming, and this hole is also passed in the fore-and-aft direction of the vehicle body similarly as the aforementioned tail light reference mount hole 37.

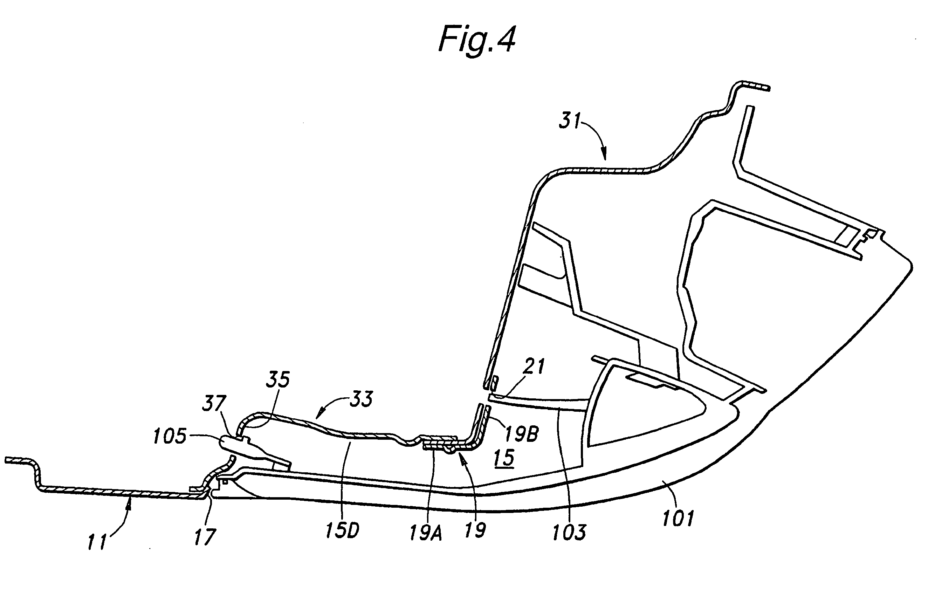

As shown in Figure 4, the lens 101 of the tail light is integrally formed with positioning projections 103 and 105, and one of the projections 103 is received by the reference hole 21 of the connecting piece 19 while the other projection 105 is received the reference hole 37 of the triangular panel inner 33. Thereby, the lens 101 of the tail light is positioned with respect to the rear panel outer 11 at two positions, and this ensures that the surface of the lens 101 is continuously connected with the outer profile of the rear part of the vehicle body.

As discussed earlier, because the upper side 15A and lower side 15B of the tail light mount opening 15 are connected to each other by the connecting piece 19, the tail light mount opening 15 is prevented from deforming during the stamp forming process and welding process. Furthermore, because the connecting piece 19 is made of the main body 19A and bent piece 19B so as to define an L-shaped cross section, the connecting piece 19 is given with a high rigidity by itself, and the positional precision of the reference hole 21 formed in the connecting piece 19 can be ensured. As a result, the lens 101 of the tail light can be positioned at a high precision, and the outer surface of the lens of the tail light can be positively prevented from being raised or recessed from the outer surface of the rear panel outer 11.

Also, because the triangular opening 15D extends from the forward edge of the connecting piece 19 to the pointed end 15C of the V-shaped notch, the triangular opening of the rear panel inner is not required to be formed by a drawing process, and the shape of the tail light mount opening 19 can be selected at will. As a result, a great freedom can be attained in the design of the outer profile of the lens of the tail light or the tail light design itself so that the tail light may be given with the shape of a V-shaped notch with the pointed end directed in the forward direction.

Furthermore, if the triangular panel inner 33 is drawn at a high precision, and is welded to the rear panel outer 11 at a high precision, the reference hole 37 of the triangular rear panel inner 33 can be at a high positional precision. By positioning the lens 101 of the tail light with respect to the rear panel outer 11 by using the mount reference hole 37 in addition to the mount reference hole 21 of the connecting piece 19, it can be positively ensured that the surface of the lens 101 smoothly connects to the surface of the rear part of the vehicle body.

Although the present invention has been described in terms of preferred embodiments thereof, it is obvious to a person skilled in the art that various alterations and modifications are possible without departing from the scope of the present invention which is set forth in the appended claims.

## Claims

1. A rear panel arrangement for a motor vehicle, comprising:
a rear panel outer (11) having a tail light mount opening (15) formed therein; and
a connecting piece (19) extending across the tail light mount opening (15), the connecting piece (19) being provided with a tail light mount reference hole (21) for positioning a tail light,
**characterized in that** the connecting piece (19) includes a main part (19A) as a continuous extension of the rear panel outer (11) and at least one bent piece (19B) that is bent in an inboard direction from the rear edge of the main part (19A) in a perpendicular direction, wherein the tail light mount reference hole (21) is passed through the bent piece (19B) of the connecting piece (19) by a stamp forming process.

2. The rear panel arrangement according to claim 1, wherein the main part (19A) and the bent piece (19B) of the connecting piece (19) form an L-shaped cross section.

3. The rear panel arrangement according to claim 1, wherein the connecting piece (19) is provided with a surface which is recessed with respect to a surrounding surface of the rear panel outer (11).

4. The rear panel arrangement according to claim 1, wherein the tail light mount opening (15) is provided with a V-shaped notch (15C) including an open rear side, and an upper side (15A) and lower side (15B) that merges at a forward end of the tail light mount opening (15), the connecting piece (19) extending substantially vertically between the upper and lower sides (15A, 15B) thereof.

5. The rear panel arrangement according to claim 4, wherein the connecting piece (19) is integrally stamp formed with the rear panel outer (11).

6. The rear panel arrangement according to claim 5, further comprising a triangular panel inner (33) which is attached to an inner side of the rear panel outer (11) so as to at least partly close a triangular opening (15D) defined by a forward edge of the connecting piece (19) and the upper and lower sides (15A, 15B) of the tail light mount opening (15), the triangular panel inner (33) being welded to the connecting piece (19) and parts (23, 25) of the rear panel outer (11) adjoining the upper and lower sides (15A, 15B) of the triangular opening (15D).

7. The rear panel arrangement according to claim 6, wherein an additional tail light mount reference hole (37) is formed in the triangular panel inner (33).

8. The rear panel arrangement according to claim 6, further comprising at least one tab piece (23, 25) extending from the rear panel outer (11) into the triangular opening (15D), the triangular panel inner (33) being welded to the tab piece (23, 25).

## Patentansprüche

1. Heckplattenanordnung für ein Kraftfahrzeug, umfassend:
eine Heckaußenplatte (11), in der eine Heckleuchtenbefestigungsöffnung (15) ausgebildet ist; und
ein Verbindungsstück (19), das sich quer durch die Heckleuchtenbefestigungsöffnung (15) erstreckt, wobei das Verbindungsstück (19) mit einem Heckleuchtenbefestigungsreferenzloch (21) zum Positionieren einer Heckleuchte versehen ist,
**dadurch gekennzeichnet, dass** das Verbindungsstück (19) ein Hauptteil (19A) als durchgehende Verlängerung der Heckaußenplatten (11) und zumindest ein gebogenes Stück (19B), das vom Hinterrand des Hauptteils (19A) in orthogonaler Richtung einwärts gebogen ist, enthält, worin das Heckleuchtenbefestigungsreferenzloch (21) durch einen Stanzformungsprozess das gebogene Stück (19B) des Verbindungsstücks (19) durchsetzt.

2. Die Heckplattenanordnung nach Anspruch 1, worin das Hauptteil (19A) und das gebogene Stück (19B) des Verbindungsstücks (19) einen L-förmigen Querschnitt bilden.

3. Die Heckplattenanordnung nach Anspruch 1, worin das Verbindungsstück (19) mit einer Oberfläche versehen ist, die in Bezug auf eine Umgebungsfläche der Heckaußenplatte (11) vertieft ist.

4. Die Heckplattenanordnung nach Anspruch 1, worin die Heckleuchtenbefestigungsöffnung (15) mit einer V-förmigen Kerbe (15C) versehen ist, die eine offene Rückseite sowie eine Oberseite (15A) und Unterseite (15B) enthält, die am vorwärtigen Ende der Heckleuchtenbefestigungsöffnung (15) zusammenlaufen, wobei sich das Verbindungsstück (19) im Wesentlichen vertikal zwischen den Ober- und Unterseiten (15A, 15B) derselben erstreckt.

5. Die Heckplattenanordnung nach Anspruch 4, worin das Verbindungsstück (19) einstückig mit der Heckaußenplatte (11) gestanzt ist.

6. Die Heckplattenanordnung nach Anspruch 5, die ferner eine dreieckige Innenplatte (33) aufweist, die an einer Innenseite der Heckaußenplatte (11) so angebracht ist, dass sie eine dreieckige Öffnung (15D) zumindest teilweise verschließt, die durch einen Vorderrand des Verbindungsstücks (19) und die Ober- und Unterseiten (15A, 15B) der Heckleuchtenbefestigungsöffnung (15) definiert ist, wobei die dreieckige Innenplatte (33) an das Verbindungsstück (19) und Teile (23, 25) der Heckaußenplatte (11), die sich an die Ober- und Unterseiten (15A, 15B) der dreieckigen Öffnung (15D) anschließen, geschweißt ist.

7. Die Heckplattenanordnung nach Anspruch 6, worin ein zusätzliches Heckleuchtenbefestigungsreferenzloch (37) in der dreieckigen Innenplatte (33) ausgebildet ist.

8. Die Heckplattenanordnung nach Anspruch 6, die ferner zumindest ein Laschenstück (23, 25) aufweist, das sich von der Heckaußenplatte (11) in die dreieckige Öffnung (15D) hinein erstreckt, wobei die dreieckige Innenplatte (33) an das Laschenstück (23, 25) geschweißt ist.

## Revendications

1. Agencement de panneau arrière pour un véhicule à moteur, comprenant :
une région extérieure (11) dudit panneau arrière, dans laquelle est pratiquée une ouverture (15) de montage de feu arrière ; et
une pièce de liaison (19) s'étendant en travers de ladite ouverture (15) de montage de feu arrière, ladite pièce de liaison (19) étant munie d'un trou (21) de référence de montage de feu arrière, en vue du positionnement d'un feu arrière,
**caractérisé par le fait que** la pièce de liaison (19) comporte une partie principale (19A), constituant un prolongement continu de la région extérieure (11) dudit panneau arrière, et au moins une partie coudée (19B) qui est coudée perpendiculairement vers l'intérieur, à partir du bord postérieur de ladite partie principale (19A), le trou (21) de référence de montage du feu arrière étant pratiqué par poinçonnage dans ladite partie coudée (19B) de ladite pièce de liaison (19).

2. Agencement de panneau arrière selon la revendication 1, dans lequel la partie principale (19A) et la partie coudée (19B) de la pièce de liaison (19) forment un profil configuré en L en coupe transversale.

3. Agencement de panneau arrière selon la revendication 1, dans lequel la pièce de liaison (19) est pourvue d'une surface en retrait vis-à-vis d'une surface environnante de la région extérieure (11) dudit panneau arrière.

4. Agencement de panneau arrière selon la revendication 1, dans lequel l'ouverture (15) de montage du feu arrière comporte une encoche (15C) configurée en V présentant un côté postérieur ouvert, ainsi qu'une face supérieure (15A) et une face inférieure (15B) fusionnant dans une extrémité antérieure de ladite ouverture (15) de montage du feu arrière, la pièce de liaison (19) s'étendant pour l'essentiel verticalement entre lesdites faces supérieure et inférieure (15A, 15B) de ladite ouverture.

5. Agencement de panneau arrière selon la revendication 4, dans lequel la pièce de liaison (19) est ménagée d'un seul tenant, par matriçage, avec la région extérieure (11) dudit panneau arrière.

6. Agencement de panneau arrière selon la revendication 5, comprenant, en outre, une région intérieure triangulaire (33) dudit panneau, fixée à un côté intérieur de la région extérieure (11) dudit panneau arrière afin de fermer, au moins partiellement, une ouverture triangulaire (15D) définie par un bord antérieur de la pièce de liaison (19), et par les faces supérieure et inférieure (15A, 15B) de l'ouverture (15) de montage du feu arrière, ladite région intérieure triangulaire (33) dudit panneau étant soudée à ladite pièce de liaison (19), et à des parties (23, 25) de ladite région extérieure (11) dudit panneau arrière qui sont adjacentes auxdites faces supérieure et inférieure (15A, 15B) de l'ouverture triangulaire (15D).

7. Agencement de panneau arrière selon la revendication 6, dans lequel un trou supplémentaire (37) de référence de montage du feu arrière est pratiqué dans la région intérieure triangulaire (33) dudit panneau.

8. Agencement de panneau arrière selon la revendication 6, comprenant, en outre, au moins une patte (23, 25) s'engageant dans l'ouverture triangulaire (15D) à partir de la région extérieure (11) dudit panneau arrière, la région intérieure triangulaire (33) dudit panneau étant soudée à ladite patte (23, 25).
